# EUROPEAN PATENT APPLICATION

(11) **EP 3 981 482 A1**
(43) Date of publication of application: **13.04.2022**
(21) Application number: 20201410.6
(22) Date of filing: 12.10.2020
(51) Int. Cl.: A63F 13/65, A63F 13/35, A63F 13/803

(54) **METHOD AND SYSTEM FOR MANAGING INTERACTIONS IN AN AUGMENTED REALITY GAME BETWEEN A PLURALITY OF PLAYERS LOCATED IN DIFFERENT LOCATIONS**

(71) Applicant: Atos Nederland B.V., 1185 MC Amstelveen (NL)
(72) Inventor: OLDENHAVE, Danny, 6931 AP Westervoort (NL); DE VRIES, Wouter, 1051 VR Amsterdam (NL)
(74) Representative: Argyma

(57) **Abstract**

A method for managing interactions in an augmented reality game between at least a first player (Pa) and a second player (Pb) comprising the followings steps:
each player (Pa-Pb) uses the electronic device (Da-Db) to capture images of the local digital environment (DEa-DEb) comprising a local spatial anchor (LSAa-LSAb), the electronic device (Da-Db) determining the position, the scale and the orientation of a local 3D referential in the captured images,
the first player (Pa) uses his electronic device (Da) to modify the position of a personal gaming element (GE-Pa) in the first local 3D referential,
the second player (Pb) uses his electronic device (Db) to display a non-personal gaming element corresponding to the personal gaming element of the first device (Da), the central server (S) synchronizing the position of said non-personal gaming element from the first local 3D referential to the second local 3D referential in the displayed images.

## Description

### TECHNICAL FIELD

The present invention relates to an augmented reality (AR) game where players are in different locations.

Because of sanitary conditions, it is not possible anymore for shops to offer entertainment for customers inside the shops because of distancing requirements and disinfection drawbacks. It has been suggested to offer augmented reality game so that the customers can play directly in the shop with their own electronic device. An augmented reality game is commercially advantageous because it allows to display the products to be sold inside the game.

Augmented reality games are known in the prior art for a single user. In general, the player uses an electronic device with a camera and a display screen (smartphone or analog) to capture images of the digital environment observed by the camera, process the images by adding augmented reality information and display the processed images onto the display screen.

The added augmented reality information is usually provided by a server through a communication network based on different parameters, for example, a GPS location, a compass information or a marker present in the digital environment.

According to a first example, a user has a card on which a marker is present. The camera captures an image of the digital environment which includes the marker. Through image processing, the marker is identified and the server provides added augmented reality information in connection with the identified marker. For example, when the card comprises a 2D image with a T-Rex dinosaur, the added augmented reality information corresponds to a 3D T-Rex dinosaur which is displayed on the smartphone screen.

According to another example, it is known a game "Pokemon Go" in which each player searches monsters in a digital environment. The added augmented reality information (monsters) depend on the GPS location and a compass information of the electronic device. Such a game allows players to play at the same time but not together since there is no interaction between the users.

The objective of the present invention is to offer a method and system for managing interactions in an augmented reality game between a plurality of players located in different locations.

### SUMMARY

The invention relates to a method for managing interactions in an augmented reality game between at least a first player and a second player located in different locations, each player being located in a local digital environment to play the game, each player having an electronic device connected to a central server through a data network, the game defining a plurality of augmented reality elements (hereinafter "gaming elements") to be displayed on the electronic devices, each gaming element being associated with one device (hereinafter "personal gaming elements"), each player playing with personal gaming elements and with non-personal gaming elements on his electronic device, the method comprising the followings steps :
- each player places a predetermined local spatial anchor in his local digital environment, the local spatial anchor defining a local 3D referential,
- during the game, each player uses his electronic device to capture images of the local digital environment comprising the local spatial anchor, the electronic device determining the position, the scale and the orientation of the local 3D referential in the captured images,
- the first player uses his electronic device to modify the position of a personal gaming element in the first local 3D referential, the modifications being sent to the central server,
- the second player uses his electronic device to display a non-personal gaming element corresponding to the personal gaming element of the first device, the central server synchronizing the position of said non-personal gaming element from the first local 3D referential to the second local 3D referential in the displayed images.

Thanks to the invention, multiple players can share interactions while playing the game. Advantageously, the same gaming elements are synchronized between different local referentials. In other words, each player can enjoy the same game but from different perspectives or point of views. Each player can move physically in the digital environment to modify its perspective. Even if the players are spaced apart, they share interactions.

Preferably, the personal gaming element being an avatar of the first player, the position of the avatar is based on a position vector defined between the local 3D referential and the position of the device. The avatar of the first player is added to the game so that other players can see a representation of the first player which increases interaction. Advantageously, the position of the avatar is determined dynamically based on the position of the device of the first player. When the first player moves in the digital environment, his movement is perceived by the other players which increases interactions.

Preferably the personal gaming element is an emoji or a gaming item.

In an embodiment, the local spatial anchor is a physical target, for example, a card. Preferably, the local spatial anchor comprises an oriented image.

The invention relates also to a system for managing interactions in an augmented reality game between at least a first player and a second player located in different locations, each player being located in a local digital environment to play the game, each player having an electronic device, each player having a local spatial anchor defining a local 3D referential to be placed in his local digital environment, the game defining a plurality of augmented reality elements to be displayed on the electronic devices, each gaming element being associated with one device, each player playing with personal gaming elements and with non-personal gaming elements on his electronic device, the system comprising:
- a central server configured to be connected to the electronic devices through a data network,
- during the game, each electronic device of a player being configured to capture images of the local digital environment comprising the local spatial anchor and to determine the position, the scale and the orientation of the local 3D referential in the captured images,
- the first electronic device being configured to modify the position of a personal gaming element in the first local 3D referential, the modifications being sent to the central server,
- the second electronic device being configured to display a non-personal gaming element corresponding to the personal gaming element of the first device, the central server synchronizing the position of said non-personal gaming element from the first local 3D referential to the second local 3D referential in the displayed images.

### BRIEF DESCRIPTION OF THE DRAWINGS

The invention will be better understood by reading the description that follows, only given as an example, and by referring to the appended Figures in which:
Figure 1 is a schematic view of a system according to the invention,
Figure 2A is a schematic view of a local digital environment of the first player,
Figure 2B is a schematic view of a local digital environment of the second player,
Figure 3 is a schematic view of a gaming elements in the first local 3D referential,
Figure 4 is a schematic view of a local spatial anchor defining a local referential,
Figure 5 is a schematic view of two players connected to a central server,
Figure 6A is a schematic view of the first device during the game,
Figure 6B is a schematic view of the second device during the game,
Figure 6C is a schematic view of a gaming elements in the second local 3D referential, and
Figure 7 is a schematic view of the first device during the game with the representation of the avatar and the racing car of the second player.

It should be noted that the Figures set out the invention in a detailed manner to implement the invention, said Figures obviously being able to serve to better define the invention if need be.

### DETAILED DESCRIPTION

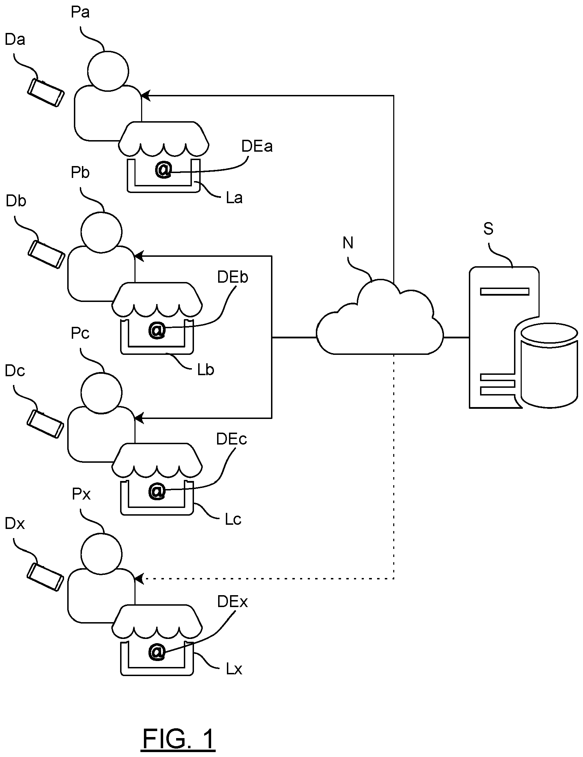

The present invention relates to a method for managing interactions in an augmented reality game. As represented in Figure 1, the game is between a plurality of players Pa-Px located in different locations La-Lx.

The invention will be presented for a racing game but the game could be of any sort (clue games, shooting games, etc.).

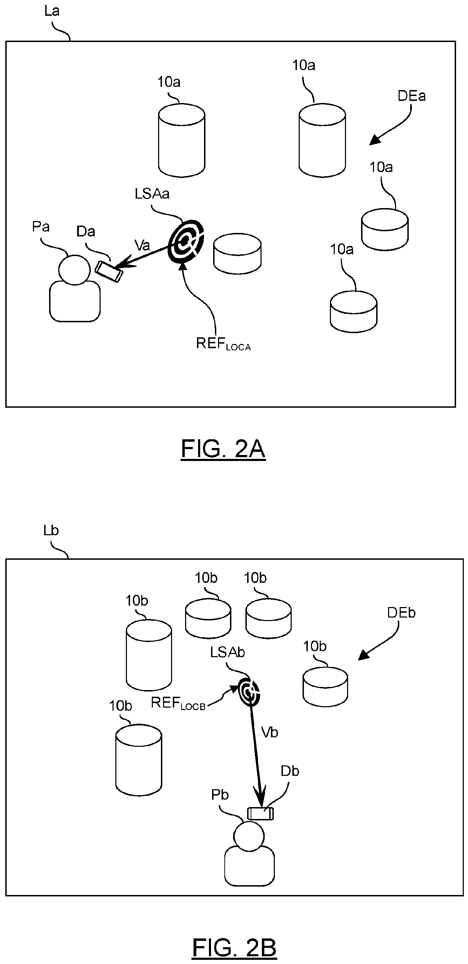

In this example, each player Pa-Px is located in a local digital environment DEa-DEx to play the game. As represented in Figure 2A, a first player Pa is in the location La and in a digital environment DEa. For example, the digital environment DEa comprises different pieces of furniture 10a. Similarly, as represented in Figure 2B, a second player Pb is in the location Lb and in a digital environment DEb. For example, the digital environment DEb comprises different pieces of furniture 10b. As it will be presented later, in an augmented reality game, each digital environment DEa, DEb is part of the game.

According to the invention, as represented in Figure 1, each player Pa-Px has an electronic device Da-Dx connected to a central server S through a data network N. The data network N can be a private or public network. The electronic device Da-Dx is configured to be used for an augmented reality game and is preferably in the form of a smartphone or a tab. In this example, the electronic device Da-Dx comprises a network module to connect to the data network N, a camera for capturing images, a screen for displaying images, preferably located on the opposite side of the camera on the device, a processor for processing images and gaming elements and an input module, for example, a touch screen or buttons.

The players Pa-Px are located in different locations La-Lx, for example, in a network of shops of the same brand. The players Pa-Px are distant from each other. There is no physical interaction which is advantageous in a pandemic period of time.

Each electronic device Da-Dx runs a game application and is configured to execute gaming instructions. Each game application defines a plurality of augmented reality elements (hereinafter "gaming elements GE"). The gaming elements GE are represented in 3D and their scale, position and orientation are determined in a local 3D referential REF_{LOCA}-REF_{LOCX}.

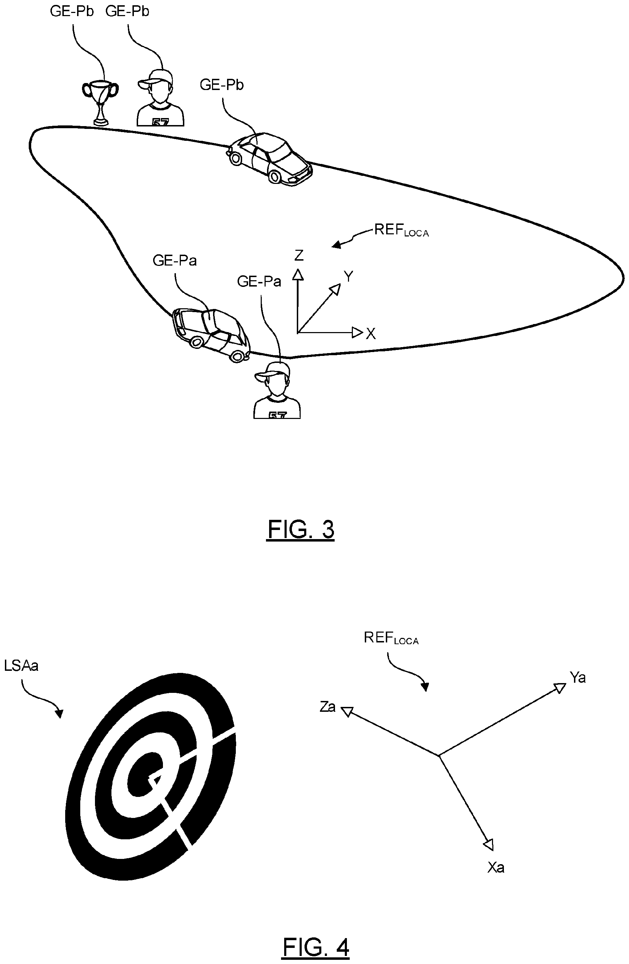

Each gaming element GE comprises several attributes, for example, a position, an orientation, a scale, a shape, a color, etc. For example, Figure 3 represents different types of gaming elements GE: racing cars, items, roads, emoji, avatars, speech bubbles, gifts. The gaming elements GE can be of different nature depending on the type of game played.

Each gaming element GE is associated with one device Da-Dx (hereinafter "personal gaming elements"). The personal gaming elements GE can be modified by the player himself Pa-Px when using his device Da-Dx. For example, as represented in Figure 3, for the first player Pa using the device Da, the racing car is a personal gaming element GE-Pa and its attributes can be modified by the first player Pa (color, car brand, car type, ...). Similarly, the first player Pa is represented in the game by an avatar which is a personal gaming element GE-Pa and which attributes can be modified by the first player Pa (color, type, clothes, face, ...). The racing car and the avatar of the second player Pb are personal gaming elements GE-Pb for the second player Pb using the device Db but are non-personal gaming elements for the first player Pa. In this example, the second player Pb has also a personal item (cup) GE-Pb. As it well be seen later, each player Pa-Px can play with personal gaming elements and with non-personal gaming elements on his electronic device Da-Dx.

In order to properly display game elements GE in a digital environment DEa-DEx, each player Pa-Px has a predetermined local spatial anchor LSAa-LSAx (called below "local anchor") which defines a local 3D referential REF_{LOCA}-REF_{LOCX}.

As illustrated on Figure 2a representing the digital environment DEa of the first player Pa, the local spatial anchor LSAa is in the form of a physical target which defines a local 3D referential REF_{LOCA} with 3 axes Xa, Ya, Za as represented on Figure 4. The local spatial anchor LSAa can be of different kinds, such as an oriented image or analog. The local spatial anchor LSAa can be easily identified within pictures captured by the device Da by image processing in order to determine the position, the scale and the orientation of the local 3D referential REF_{LOCA} in the captured images.

The central server S is configured to synchronize the gaming elements GE between players Pa-Px through the data network N so that the players PA-Px share the same experience. In practice, the central server S synchronizes the position of non-personal gaming element in the local 3D referential of a player.

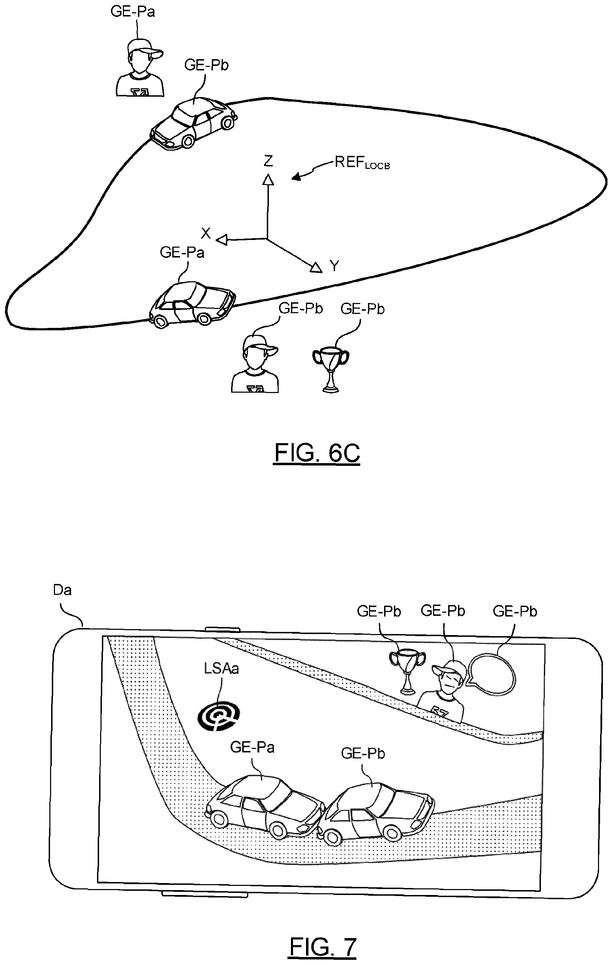

According to the invention, the attributes of the gaming elements GE are synchronized between the different local 3D referentials REF_{LOCA-LOCX}. In other words, the players Pa-Px enjoy the same game from different perspectives, distances or angles (see Figures 3 and 6C showing different perspectives). Thanks to its local spatial anchor LSAa-LSAx, a player Pa-Px can move in the digital environment DEa-DEx and enjoy the game from different perspectives, distances or angles. The player Pa-Px can be part of the game.

As represented in Figure 2A, the position of the avatar of the first player Pa is based on a position vector Va defined between the local 3D referential REF_{LOCA} and the position of the device Da. In other words, when the first player Pa moves in the digital environment DEa, the position vector Va is modified and the avatar position is modified in the others local 3D referentials so that the other players can see in the game the movements of the first player Pa. In other words, the avatar is located at the player location. The avatar position is updated dynamically by the central server S.

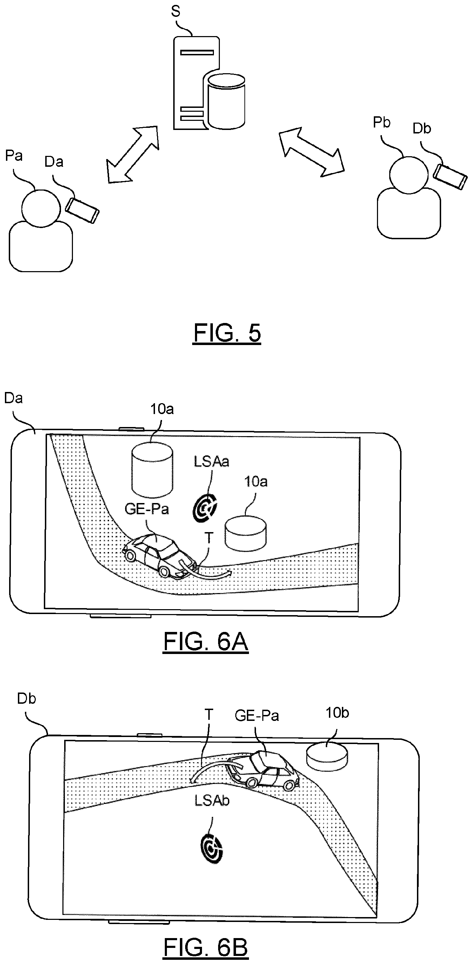

As represented in Figure 5, the method for managing interactions in an augmented reality game will be presented between two players Pa, Pb located in different locations La, Lb in different digital environments DEa-DEb (Figure 2A and Figure 2B).

In this example, several gaming elements are defined in the game : :
- a first racing car and an avatar associated with the first player Pa
- a second racing car, an avatar and a gaming element associated with the second player Pb.

In this example, each player Pa, Pb can drive its racing car GE-Pa, GE-Pb by touching the touchscreen of its electronic device Da, Db. Besides, each player Pa, Pb can also modify the color of his racing car and his avatar.

As represented in Figures 2A and 2B, each digital environment DEa, DEb comprises different pieces of furniture 10a, 10b. In a preparation step, each player Pa, Pb places a predetermined local spatial anchor LSAa, LSAb in his local digital environment DEa, DEb. Each local spatial anchor LSAa, LSAb defines a local 3D referential REF_{LOCA}, REF_{LOCB} which are different (different scale, orientation, etc.). A position vector Va, Vb is defined between the local 3D referential REF_{LOCA}, REF_{LOCB} and the position of the device Da, Db.

In a connection step, each player Pa, Pb connects his device Da, Db to the central serve S through the data network N in order for the players Pa, Pb to share a same gaming experience. In this example, the central server S sets up a gaming hub where the players Pa, Pb can play the racing game and chat.

During the game, each player Pa, Pb uses his electronic device Da, Db to capture images of the local digital environment DEa, DEb comprising the local spatial anchor LSAa, LSAb. The electronic device Da, Db determines the position, the scale and the orientation of the local 3D referential REF_{LOCA}, REF_{LOCB} in the captured images, preferably, by image processing.

The first player Pa uses his electronic device Da to play with his personal gaming elements GE-Pa and modify their attributes. As represented on Figures 6A and 6B, on the first electronic device Da, the central server S synchronizes the personal gaming elements GE-Pb of the second electronic device Db between the second local 3D referential REF_{LOCB} and the first local 3D referential REF_{LOCA}. Similarly, on the second electronic device Db, the central server S synchronizes the first local 3D referential REF_{LOCA} and the second local 3D referential REF_{LOCB}.

The gaming elements GE-Pa, GE-Pb are synchronized between players Pa, Pb through the central server S. The same gaming elements GE-Pa, GE-Pb are seen, in real time, from two different perspectives on the two devices Da, Db. The perspective depends from the distance, orientation, inclination of the device Da, Db and of the local spatial anchor LSAa, LSAb. The pieces of furniture 10a, 10b are also visible in the displayed images of device Da, Db.

In this example, on Figure 6A, the first player Pa uses his electronic device Da to modify the position of the first car (personal gaming element GE-Pa) in his local 3D referential REF_{LOCA}. The first player Pa makes the first car GE-Pa turns left along the curve as represented on Figure 6A. The position of the first car GE-Pa is sent to the central server S and transposed from the first local 3D referential REF_{LOCA} to the second local 3D referential REF_{LOCB} as represented on Figure 6B.

In Figures 3 and 6C, it is represented how the same game elements GE-pa, GE-Pb are represented differently in the first local 3D referential REF_{LOCA} (Figure 3) and in the second local 3D referential REF_{LOCB} (Figure 6C).

As represented on Figure 7, the players Pa, Pb can interact together and have racing cars GE-Pa, GE-Pb displayed at the same time. Each player Pa, Pb can advantageously move its device Pa, Pb to enjoy the game with the most pleasant perspective. In Figure 7, the first player Pa can see the avatar GE-Pb of the second player Pb which position depends directly from the position vector Vb. Even if the two players Pa, Pb are not in the same location, the first player Pa can see the second player Pb moving which increases interaction. The second player Pb can also display emojis or items to increase the interaction.

Both racing cars GE-Pa, GE-Pb are displayed at the same time, each player Pa, Pb can drive independently his racing car GE-Pa, GE-Pb. Advantageously, the interaction between racing cars GE-Pa, GE-Pb (contacts, crash) are determined by the gaming instructions executed by each electronic device Da-Db.

## Claims

1. A method for managing interactions in an augmented reality game between at least a first player (Pa) and a second player (Pb) located in different locations (La-Lb), each player (Pa-Pb) being located in a local digital environment (DEa-DEb) to play the game, each player (Pa-Pb) having an electronic device (Da-Db) connected to a central server (S) through a data network (N), the game defining a plurality of augmented reality elements (hereinafter "gaming elements (GE)") to be displayed on the electronic devices (Da-Db), each gaming element (GE) being associated with one device (Da-Db) (hereinafter "personal gaming elements (GE)"), each player (Pa-Pb) playing with personal gaming elements and with non-personal gaming elements on his electronic device (Da, Db), the method comprising the followings steps :
- each player (Pa-Pb) places a predetermined local spatial anchor (LSAa-LSAb) in his local digital environment (DEa-DEb), the local spatial anchor (LSAa-LSAb) defining a local 3D referential (REF_{LOCA}- REF_{LOCB}),
- during the game, each player (Pa-Pb) uses his electronic device (Da-Db) to capture images of the local digital environment (DEa-DEb) comprising the local spatial anchor (LSAa-LSAb), the electronic device (Da-Db) determining the position, the scale and the orientation of the local 3D referential (REF_{LOCA}-REF_{LOCB}) in the captured images,
- the first player (Pa) uses his electronic device (Da) to modify the position of a personal gaming element (GE-Pa) in the first local 3D referential (REF_{LOCA}), the modifications being sent to the central server (S)
- the second player (Pb) uses his electronic device (Db) to display a non-personal gaming element (GE-Pa) corresponding to the personal gaming element (GE-Pa) of the first device (Da), the central server (S) synchronizing the position of said non-personal gaming element (GE-Pa) from the first local 3D referential (REF_{LOCA}) to the second local 3D referential (REF_{LOCB}) in the displayed images.

2. A method according to claim 1, wherein the personal gaming element (GE-Pa) being an avatar of the first player (Pa), the position of the avatar is based on a position vector (Va) defined between the first local 3D referential (REF_{LOCA}) and the position of the device (Da).

3. A method according to claim 1, wherein the personal gaming element is an emoji.

4. A method according to claim 1, wherein the personal gaming element is a gaming item.

5. A method according to one of claims 1 to 4, wherein the local spatial anchor (LSAa-LSAb) is a physical target.

6. A method according to claims 5, wherein the local spatial anchor (LSAa-LSAb) comprises on oriented image.

7. A system for managing interactions in an augmented reality game between at least a first player (Pa) and a second player (Pb) located in different locations (La-Lb), each player (Pa-Pb) being located in a local digital environment (DEa-DEb) to play the game, each player (Pa-Pb) having an electronic device (Da-Db), each player (Pa-Pb) having a local spatial anchor (LSAa-LSAb) defining a local 3D referential (REF_{LOCA}- REF_{LOCB}) to be placed in his local digital environment (DEa-DEb), the game defining a plurality of augmented reality elements (hereinafter "gaming elements (GE)") to be displayed on the electronic devices (Da-Db), each gaming element (GE) being associated with one device (Da-Db) (hereinafter "personal gaming elements (GE)"), each player (Pa-Pb) playing with personal gaming elements and with non-personal gaming elements on his electronic device (Da, Db), the system comprising:
- a central server (S) configured to be connected to the electronic devices (Da-Dx) through a data network (N),
- during the game, each electronic device (Da-Db) of a player (Pa, Pb) being configured to capture images of the local digital environment (DEa-DEb) comprising the local spatial anchor (LSAa-LSAb) and to determine the position, the scale and the orientation of the local 3D referential (REF_{LOCA}-REF_{LOCB}) in the captured images,
- the first electronic device (Da) being configured to modify the position of a personal gaming element (GE-Pa) in the first local 3D referential (REF_{LOCA}), the modifications being sent to the central server (S),
- the second electronic device (Db) being configured to display a non-personal gaming element (GE-Pa) corresponding to the personal gaming element (GE-Pa) of the first device (Da), the central server (S) synchronizing the position of said non-personal gaming element (GE-Pa) from the first local 3D referential (REF_{LOCA}) to the second local 3D referential (REF_{LOCB}) in the displayed images.
